# EUROPÄISCHE PATENTSCHRIFT

(11) **EP 2 389 300 B1**
(45) Veröffentlichungstag und Bekanntmachung des Hinweises auf die Patenterteilung: **28.10.2015**
(21) Anmeldenummer: 09799549.2
(22) Anmeldetag: 23.12.2009
(51) Int. Cl.: B60G 21/055, B60G 17/02, B60G 11/18, B60G 17/016

(54) **ANORDNUNG EINES STABILISATORS AN EINER RADAUFHÄNGUNG FÜR KRAFTFAHRZEUGE**
ARRANGEMENT OF A STABILIZER ON A WHEEL SUSPENSION FOR MOTOR VEHICLES
DISPOSITIF DE STABILISATEUR SUR UNE SUSPENSION DE ROUE DE VÉHICULE MOTORISÉ

(30) Priorität: 23.01.2009 DE 102009005898
(43) Veröffentlichungstag der Anmeldung: 30.11.2011
(73) Patentinhaber: Audi AG, 85045 Ingolstadt (DE)
(72) Erfinder: OHLETZ, Armin, 85092 Kösching (DE); SCHMIDT, Walter, 86643 Rennertshofen (DE)
(74) Vertreter: Asch, Konrad
(86) Internationale Anmeldenummer: PCT/EP2009/009235
(87) Internationale Veröffentlichungsnummer: WO 2010/083874

(56) Entgegenhaltungen:
- EP-A1- 1 867 503
- EP-A1- 1 958 804
- DE-A1- 10 126 928
- DE-A1- 10 242 552
- DE-A1-102004 002 550
- JP-A- 59 013 145
- JP-A- 2004 314 947
- JP-A- 2006 082 751
- JP-A- 2008 302 731
- US-A- 2 480 934
- US-A1- 2005 167 932

## Beschreibung

Die Erfindung betrifft eine Anordnung eines Stabilisators an einer Radaufhängung für Kraftfahrzeuge gemäß dem Oberbegriff des Patentanspruches 1.

Gattungsgemäße Anordnungen von zweigeteilten Stabilisatoren mit einer Stellvorrichtung zum Beeinflussen der Federraten und der Fahreigenschaften von Kraftfahrzeugen zeigen beispielsweise die JP 2006 082751 A, DE 101 26 928 A1, DE 10 2004 002 550 A1, oder die DE 102 42 552 B4. Dabei kann durch gegensinniges Verstellen der geteilten Torsionsstäbe des insgesamt U-förmigen Stabilisators das Wankverhalten beziehungsweise die Kurvenneigung des Kraftfahrzeuges verringert oder durch gleichsinniges Verstellen der Nickneigung zum Beispiel beim Bremsen entgegengewirkt werden.

Aus der DE 10 2007 007 214 A1 ist eine Anordnung eines zweiteilig ausgeführten Stabilisators an einer Radaufhängung für ein Kraftfahrzeug bekannt. Dieser Stabilisator weist getrennt voneinander ausgeführte Torsionsstäbe auf, die jeweils über einen Abtriebshebel an Radaufhängungselementen angelenkt sind und mittels jeweils zugeordneter Stellvorrichtungen gleich- oder gegensinnig miteinander verdrehbar sind. Zur Vergrößerung seiner wirksamen Torsionslänge ist jeder Torsionsstab mit einer, den Torsionsstab umfassenden Hohlwelle verlängert, auf der der Abtriebshebel ausgebildet ist. Der Torsionsstab ist daher trieblich mit der koaxial angeordneten, rückführenden Hohlwelle verbunden. Der Stabilisator ist einerseits während des Fahrbetriebs thermischen Belastungen ausgesetzt, die seine Funktionsfähigkeit beeinträchtigen können. Andererseits kann der Stabilisator im Kundendienstfall nur montagetechnisch aufwändig aus dem Fahrzeug ausgebaut werden.

Die Aufgabe der Erfindung besteht darin, eine Anordnung eines zweiteilig ausgeführten Stabilisators an einer Radaufhängung für ein Kraftfahrzeug bereitzustellen, der einer thermischen Beanspruchung standhält und im Kundendienstfall reparaturfreundlich ist.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Patenanspruches 1 ist der Torsionsstab in der Stellvorrichtung in Festlagerung gelagert und in Kombination in der den Abtriebshebel tragenden Hohlwelle zugleich in axialer Loslagerung jelagert. Auf diese Weise kann bei thermischer Beanspruchung oder bei Torsionsbeanspruchung ein axialer Längenausgleich des Torsionsstabes erfolgen. Gleichzeitig trägt die erfindungsgemäße Kombination aus Los- und Festlagerung der jeweiligen Torsionsstäbe dem Umstand Rechnung, dass die Bauteile des Stabilisators mit Bauteiltoleranzen belegt sind, die mittels der Loslagerung ausgeglichen werden können, wodurch eine einwandfreie Montage des Stabilisators begünstigt wird.

Eine kostengünstige Festlagerung ergibt sich, wenn der Torsionsstab mit einem Antriebselement der Stellvorrichtung verschweißt ist. Im Gegenzug kann der Torsionsstab zur Ausbildung der Loslagerung an dessen anderem Ende axial verschiebbar sowie drehfest mit der Hohlwelle verbunden sein. Hierzu hat sich eine Keilverzahnung für die Übertragung hoher Momente bei gleichzeitigem Längenausgleich als vorteilhaft erwiesen.

Alternativ zur oben genannten Schweißverbindung kann die Festlagerung zwischen Torsionsstab und Antriebselement der Stellvorrichtung mittels einer lösbaren Verbindung erreicht werden. In diesem Fall kann der Torsionsstab axial verschiebbar in dem Antriebselement gelagert sein und über die zusätzliche lösbare Verbindung, etwa eine Schraubverbindung, in Axialrichtung festgelegt werden. In dieser Ausführungsform ist somit der Torsionsstab über zwei Loslager gelagert, von denen eines der beiden Loslager zusätzlich mittels der lösbaren Verbindung zu einem Festlager weitergebildet ist.

Im Falle eines Torsionsstabbruches muss daher nicht die komplette Stabilisatoreiriheit ausgetauscht werden, sondern lediglich der gebrochene Torsionsstäb. Mit einer derart gebildeten Festlagerung ist die Lagerung des Torsionsstabes insgesamt statisch bestimmt, ohne Verspannungen auf Grund von Temperatur oder Torsion.

Um ein stabiles Widerlager für Biegemomente bereitzustellen, kann jeder der Torsionsstäbe, insbesondere im Bereich der Abtriebshebel, in einer aufbauseitigen Lagerstelle drehbar gelagert sein. Jeder der Torsionsstäbe kann mit einer Überstandlänge über die Lagerstelle hinaus verlängert sein, wodurch seine wirksame Torsionslänge vergrößert ist. Für eine vollständige Ausnutzung des in Fahrzeugquerrichtung vorhandenen Bauraums kann jeder Torsionsstab eine Überstandlänge aufweisen, die dem Abstand zwischen der Lagerstelle und dem Fahrzeugrad in Neutrallage sowie abzüglich eines erforderlichen Freigangs des Fahrzeugrads entspricht. Auf diese Weise ist gewährleistet, dass bei einer Spur-/Sturzwinkelveränderung das Fahrzeugrad außer Kontakt mit dem Torsionsstab bleibt.

Ein Ausführungsbeispiel der Erfindung ist im Folgenden näher erläutert. Es zeigen:
- **Fig. 1**: eine Draufsicht auf eine hintere Radaufhängung für Kraftfahrzeuge, mit einem Hilfsrahmen, radführenden Lenkern, einem zweiteiligen Stabilisator und zwei auf die quer verlaufenden Torsionsstäbe des Stabilisators wirkende, elektromechanische Stellvorrichtungen;
- **Fig. 2**: einen Längsschnitt durch eine der Stabilisatorlagerungen mit verlängertem Torsionsstab und einer rückführenden Hohlwelle;
- **Fig. 3**: in einer Prinzipdarstellung eine Stellvorrichtung eines der Torsionsstäbe des Stabilisators; und
- **Fig. 4**: in einer Ansicht entsprechend der **Fig. 3** eine abgewandelte Stellvorrichtung.

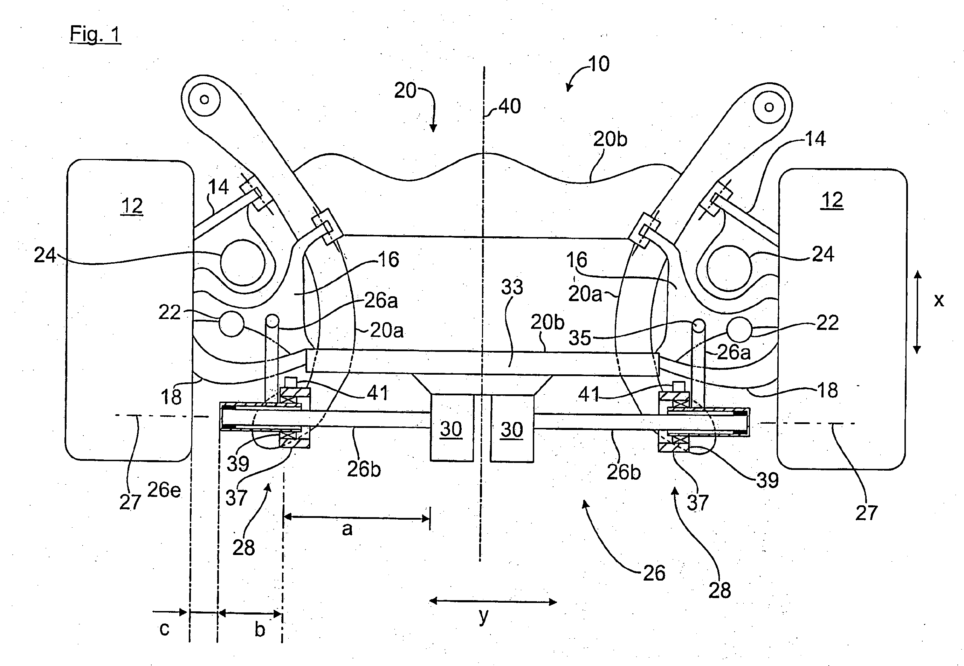

Die **Fig. 1** zeigt grob schematisch eine hintere Radaufhängung 10 für die hinteren Räder 12 eines Kraftfahrzeuges, wobei die nicht näher dargestellten, radführenden Lenker 14, 16, 18 radseitig an einem Radträger (nicht ersichtlich) und aufbauseitig an einem Hilfsrahmen 20 schwenkbar angelenkt sind. Der Hilfsrahmen 20 weist wie ersichtlich zwei Längsträger 20a und zwei Querträger 20b auf und ist in nicht dargestellter Weise am Aufbau des Kraftfahrzeuges über dämpfende Lager befestigt.

Ferner sind je ein Stoßdämpfer 22 und eine Tragfeder 24 zwischen den Lenkern 14, 18 und dem Aufbau des Kraftfahrzeuges in bekannter Weise angeordnet. Die Radaufhängung 10 kann in modifizierter Form auch als Radaufhängung für die vorderen, gelenkten Räder eines Kraftfahrzeuges ausgelegt sein.

Des Weiteren ist gemäß der **Fig.1** an der Radaufhängung 10 ein im Wesentlichen U-förmiger, zweiteiliger Stabilisator 26 über Lagerstellen 28 drehbar gelagert, dessen im Wesentlichen in Fahrzeuglängsrichtung verlaufende Abtriebshebel 26a an dem unteren Lenker 16 der Radaufhängung 10 angelenkt sind.

Der zweigeteilt ausgeführte Stabilisator 26 ist hinsichtlich seiner Wirkung auf die Lenker 16 mittels zweier elektromechanischer Stellvorrichtungen 30 verstellbar, die sich aus je einem Elektromotor und einem selbsthemmenden Untersetzungsgetriebe zusammensetzen.

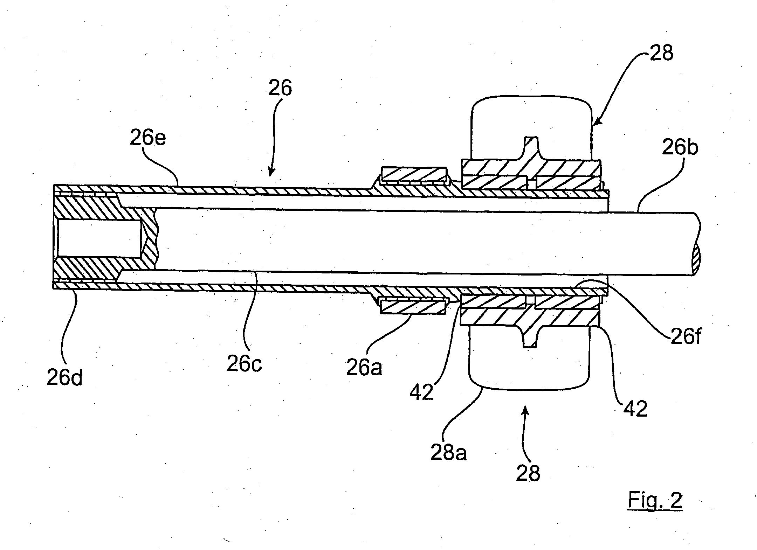

Der zweigeteilte Stabilisator 26 setzt sich, wie aus **Fig. 1** **und** **2** ersichtlich ist, wie folgt zusammen:
Ein jeder im Wesentlichen quer verlaufender Torsionsstab 26b erstreckt sich ausgehend von den Abtriebshebeln 26a über die senkrechte Fahrzeug-Mittellängsebene (strichpunktierte Linie 40) hinaus bis zur zugeordneten Stellvorrichtung 30, mit der er trieblich zum Beispiel mittels einer Keilverzahnung (nicht dargestellt) verdrehfest verbunden ist.

Die Drehachsen 27 der Torsionsstäbe 26b sind in der **Fig.1** koaxial zueinander ausgerichtet. In technischer Realisierung können die beiden Achsen 27 sich überkreuzend und leicht nach oben gepfeilt ausgeführt sein. Die Torsionsstäbe 26b sind zusammen mit ihren Abtriebshebeln 26a derart symmetrisch ausgeführt, dass die Torsionsstäbe 26b als Gleichteile links- oder rechtsseitig der Radaufhängung 10 verbaubar sind.

Wie aus der **Fig. 1** hervorgeht, sind die beiden Lagerstellen 28 über einen Lagerabstand a von den Stellvorrichtungen 30 beabstandet. Die beiden Stellvorrichtungen 30 sind dabei in einem gemeinsamen Gehäuse 31 angeordnet, das wiederum über eine Konsole 33 am hinteren Querträger 20b des Hilfsrahmens 20 befestigt ist.

Die von den Stellvorrichtungen 30 beabstandeten Lagerstellen 28 sind unmittelbar neben den Abtriebshebeln 26a, das heißt in der Fahrzeugquerrichtung y nahe an den Krafteinleitungspunkten 35 auf den Lenkern 16 angeordnet, wodurch die auf die Lagerstellen 28 wirkenden Biegemomente reduziert sind. Sowohl die Lagerstellen 28 als auch das Stellvorrichtungsgehäuse 31 sind unmittelbar am hinteren Querträger 20b des Hilfsrahmens 20 befestigt.

Ein jeder Torsionsstab 26b (vergleiche Fig. 2) ist mit einem Abschnitt 26c frei durch die Lagerstelle 28 hindurch und über die Anbindungsstelle des Abtriebshebels 26a hinaus um ein definiertes Maß verlängert und an seinem Ende über eine Keilverzahnung 26d drehfest mit einer Hohlwelle 26e verbunden, die wie ersichtlich den Längsarm 26a trägt. Das auf den Längsarm 26a ausgeübte Torsionsmoment des Torsionsstabes 26b, 26c wird somit über die Keilverbindung 26d und die Hohlwelle 26e wieder rückgeführt.

Die Hohlwelle 26e ist gemäß der **Fig. 2** mittels eines angeformten Lagerhalses 26f und über zwei Nadellager 42 in der durch die Lagerschalen 28a gebildeten, aufbaufesten Lagerstelle 28 drehbar gelagert und bildet somit die Führung sowohl der Hohlwelle 26e, als auch des Torsionsstabes 26b, 26c im Übergangsbereich zum auf der Hohlwelle 26e befestigten Längsarm 26a.

Wie aus der **Fig. 1** weiter hervorgeht, sind an beiden Lagerstellen 28 für die Torsionsstäbe 26b Lagerkonsolen 37 an die Längsträger 20a des Hilfsrahmens 20 angeformt. Diese tragen jeweils die Stützlager 39 zur drehbaren Lagerung der Torsionsstäbe 26b. Außenseitig auf den Lagerkonsolen 37 sind Federwegsensoren 41 angeordnet. Diese erfassen eine Drehbewegung der Abtriebshebel 26a. Aus dem jeweils erfassten Drehwinkel kann dann mittels einer nicht gezeigten Steuereinrichtung die Einfederbewegung des Fahrzeuges ermittelt werden.

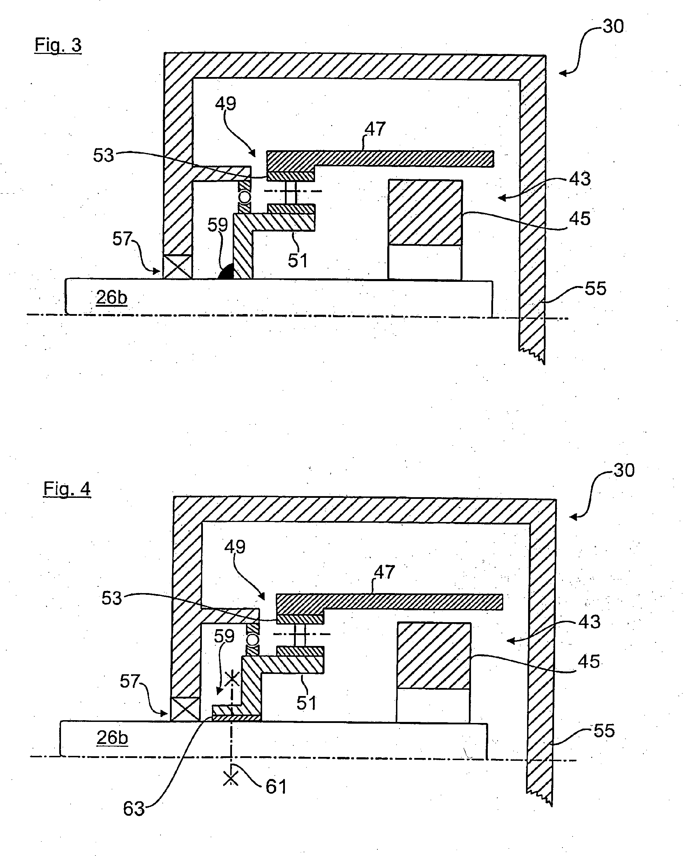

In der **Fig. 3** ist grob schematisch in Halbschnittdarstellung die gemäß der **Fig. 1** linke Stellvorrichtung 30 dargestellt. Die Stellvorrichtung 30 weist eine Elektromotor 43 auf, dessen Stator 45 berührungsfrei um das Ende des Torsionsstabes 26b geführt ist. Dem Stator 45 ist radial außerhalb ein Hohlwellen-Rotor 47 zugeordnet, der über eine Getriebestufe 49 ein topfartiges Antriebsrad 51 antreibt, das von dem Torsionsstab 26b getragen ist. Die Drehachsen des Rotors 47, des Antriebsrades 51 sowie des Torsionsstabes 26b sind koaxial zueinander angeordnet. Für eine triebliche Verbindung des Rotors 47 mit dem topfförmigen Antriebsrad 51 weist die Getriebestufe 49 ein Zwischenzahnrad 53 auf, das sowohl mit dem Rotor 47 als auch mit dem Antriebsrad 51 in Zahneingriff ist. Die Getriebestufe 49 ist zusammen mit dem Elektromotor 43 in einem Gehäuse 55 der Stellvorrichtung 30 angeordnet. Der Torsionsstab 26b ist über eine Lageröffnung 57 aus dem Gehäuse 55 herausgeführt.

Gemäß der **Fig. 3** wird das topfartige Antriebsrad 51 in Festlagerung 59 auf dem Torsionsstab 26b getragen. Die Festlagerung 59 ist in der **Fig. 3** als eine nicht lösbare Schweißverbindung realisiert. Alternativ dazu ist gemäß der **Fig. 4** das topfartige Antriebsrad 51 mit dem Torsionsstab 26b in lösbarer Schraubverbindung 61. Hierzu ist das Antriebsrad 51 mit einem zum Torsionsstab 26b koaxialen Nabenabschnitt 63 ausgebildet, der mit dem Torsionsstab 26b verschraubt ist. Im Unterschied zur **Fig. 3** kann daher bei einem Torsionsstabbruch die Schraubverbindung 61 gelöst werden und der Torsionsstab 26b montagetechnisch einfach aus dem Gehäuse 55 gezogen werden, ohne dass zusätzlich noch die Getriebestufe 49 und der Elektromotor 43 der Stellvorrichtung 30 ausgetauscht werden muss.

Wie aus der **Fig. 1** weiter hervorgeht, ragt der Torsionsstab 26d mit einer Überstandlänge b in Fahrzeugquerrichtung y über die jeweilige Lagerstelle 28 hinaus. Die Überstandlänge b des Torsionsstabes 26b ist so bemessen, dass der gesamte Bauraum zwischen der Lagerstelle 28 und dem Fahrzeugrad 12 abzüglich eines erforderlichen Freigangs c ausgenutzt wird, der für eine Sturz/Spurwinkeleinstellung erforderlich ist. Die wirksame Federlänge des Torsionsstabes 26d ist somit in Fahrzeugquerrichtung y maximal verlängert.

## Patentansprüche

1. Anordnung eines zweiteilig ausgeführten Stabilisators (26) an einer Radaufhängung für ein Kraftfahrzeug, mit getrennt voneinander ausgeführten Torsionsstäben (26b), die jeweils über einen Abtriebshebel (26a) an Radaufhängungselementen (16) angelenkt sind und mittels jeweils zugeordneter Stellvorrichtungen (30) gleich- oder gegensinnig miteinander verdrehbar sind, wobei jeder Torsionsstab (26b) zur Vergrößerung seiner wirksamen Torsionslänge mit einer, den Torsionsstab (26b) umfassenden Hohlwelle (26e) verlängert ist, auf der der Antriebshebel (26a) ausgebildet ist, **dadurch gekennzeichnet, dass** der Torsionsstab (26b) in der Stellvorrichtung (30) in Festlagerung (59) gelagert ist und in der Hohlwelle (26e) in axialer Loslagerung (26d) gelagert ist.

2. Anordnung nach Anspruch 1, **dadurch gekennzeichnet, dass** der Torsionsstab (26b) mit einem Antriebselement (51) der Stellvorrichtung (30) verschweißt ist.

3. Anordnung nach Anspruch 1 oder 2, **dadurch gekennzeichnet, dass** der Torsionsstab (26b) und die Hohlwelle (26e) in der axialen Loslagerung (26d) axial verschiebbar sowie drehfest miteinander verbunden sind.

4. Anordnung nach einem der vorhergehenden Ansprüche, **dadurch gekennzeichnet, dass** die axiale Loslagerung (26d) zwischen dem Torsionsstab (26b) und der Hohlwelle (26e) als Verzahnung, insbesondere Keilverzahnung, ausgebildet ist.

5. Anordnung nach Anspruch 2, **dadurch gekennzeichnet, dass** zur Ausbildung der Festlagerung (59) zwischen dem Torsionsstab (26b) und dem Antriebselement (51) der Stellvorrichtung (30) der Torsionsstab (26b), etwa über eine Verzahnung, axial verschiebbar sowie drehfest im Antriebselement (51) gelagert ist und über eine zusätzliche lösbare Verbindung (61), etwa eine Schraubverbindung, in Axialrichtung festlegbar ist.

6. Anordnung insbesondere nach einem der vorhergehenden Ansprüche, **dadurch gekennzeichnet, dass** jeder der Torsionsstäbe (26b), insbesondere im Bereich der Abtriebshebel (26a), in einer Lagerstelle (28) drehbar gelagert ist, und insbesondere jeder der Torsionsstäbe (26b) mit einer Überstandlänge (b) über die Lagerstellen (28) hinaus verlängert ist.

7. Anordnung nach Anspruch 6, **dadurch gekennzeichnet, dass** die Überstandlänge (b) des Torsionsstabes (26b) dem Abstand zwischen der Lagerstelle (28) und dem Fahrzeugrad (12) in dessen Neutrallage abzüglich eines erforderlichen Freigangs (c) des Fahrzeugrads (12) entspricht.

## Claims

1. Arrangement of a two-part stabiliser (26) on a wheel suspension for a motor vehicle, with torsion bars (26b) separated from one another and each of which has a drive lever (26a) articulated on wheel suspension elements (16) and capable of being rotated in the same or opposite direction to one another by means of respectively associated setting devices (30), wherein each torsion bar (26b) is extended by a hollow shaft (26e) surrounding the torsion bar (26b) in order to increase its effective torsion length, and on which the drive lever (26a) is formed, **characterised in that** the torsion bar (26b) is mounted in the setting device (30) in a fixed bearing (59) and is mounted in the axial floating bearing (26d) in the hollow shaft (26e).

2. Arrangement according to claim 1, **characterised in that** the torsion bar (26b) is welded to a drive element (51) of the setting device (30).

3. Arrangement according to claim 1 or 2, **characterised in that** the torsion bar (26b) and the hollow shaft (26e) are axially displaceable in the axial floating bearing (26d) as well as being rotatably fixed to one another.

4. Arrangement according to one of the preceding claims, **characterised in that** the axial floating bearing (26d) is formed between the torsion bar (26b) and the hollow shaft (26e) as teeth, in particular splined teeth.

5. Arrangement according to claim 2 **characterised in that** in order to form the fixed bearing (59) between the torsion bar (26b) and the drive element (51) of the setting device (30), the torsion bar (26b) is axially displaceable and rotatably fixed in the drive element (51), for example via teeth, and can be fixed in an axial direction via an additional detachable connection (61), such as a screw.

6. Arrangement according to one of the preceding claims, **characterised in that** each of the torsion bars (26b), in particular in the area of the drive lever (26a), is rotatably mounted at a bearing point (28), and in particular each of the torsion bars (26b) is also lengthened with a protruding length (b) at the bearing point (28).

7. Arrangement according to claim 6, **characterised in that** the protruding length (b) of the torsion bar (26b) corresponds to the distance between the bearing point (28) and the vehicle wheel (12) in its neutral position minus a necessary clearance (c) for the vehicle wheel (12).

## Revendications

1. Agencement d'un stabilisateur (26), réalisé en deux parties, sur une suspension de roue pour un véhicule automobile, avec des barres de torsion (26b) réalisées séparément l'une de l'autre, qui sont articulées à chaque fois par l'intermédiaire d'un levier mené (26a) sur des éléments de suspension de roue (16) et qui peuvent être tordues dans le même sens ou en sens contraire au moyen de dispositifs de réglage (30) respectivement associés, chaque barre de torsion (26b) étant prolongée, pour augmenter sa longueur de torsion efficace, avec un arbre creux (26e) qui entoure la barre de torsion (26b) et sur lequel le levier mené (26a) est conçu, **caractérisé en ce que** la barre de torsion (26b) est logée, dans le dispositif de réglage (30), dans un palier fixe (59) et, dans l'arbre creux (26e), dans un palier libre axial (26d).

2. Agencement selon la revendication 1, **caractérisé en ce que** la barre de torsion (26b) est soudée à un élément moteur (51) du dispositif de réglage (30).

3. Agencement selon la revendication 1 ou 2, **caractérisé en ce que** la barre de torsion (26b) et l'arbre creux (26e) sont assemblés l'un à l'autre dans le palier libre axial (26d) de manière à pouvoir être déplacés de façon axiale et solidaires en rotation.

4. Agencement selon l'une des revendications précédentes, **caractérisé en ce que** le palier libre axial (26d) est conçu entre la barre de torsion (26b) et l'arbre creux (26e) comme une cannelure, notamment comme une cannelure hélicoïdale.

5. Agencement selon la revendication 2, **caractérisé en ce que**, pour former le palier fixe (59) entre la barre de torsion (26b) et l'élément moteur (51) du dispositif de réglage (30), la barre de torsion (26b) est logée, par exemple par l'intermédiaire d'une cannelure, de manière à pouvoir être déplacée de façon axiale et solidaire en rotation dans l'élément moteur (51) et peut être immobilisée en direction axiale par l'intermédiaire d'une liaison amovible supplémentaire (61), par exemple un assemblage vissé.

6. Agencement notamment selon l'une des revendications précédentes, **caractérisé en ce que** chacune des barres de torsion (26b) est logée de manière à pouvoir tourner dans un point d'appui (28), notamment dans la zone du levier mené (26a), et **en ce que** notamment chacune des barres de torsion (26b) est prolongée avec une longueur de projection (b) au-delà du point d'appui (28).

7. Agencement selon la revendication 6, **caractérisé en ce que** la longueur de projection (b) de la barre de torsion (26b) correspond à la distance entre le point d'appui (28) et la roue de véhicule (12) dans la position neutre de celle-ci, moins un degré de liberté nécessaire (c) de la roue de véhicule (12).
